(19) Europäisches Patentamt
European Patent Office
Office européen des brevets

(11) **EP 2 903 198 A1**

(12) **EUROPEAN PATENT APPLICATION**

(43) Date of publication:
**05.08.2015 Bulletin 2015/32**

(51) Int Cl.:
***H04L 5/00*** *(2006.01)*

(21) Application number: **14305154.8**

(22) Date of filing: **04.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Wild, Thorsten**
 **70435 Stuttgart (DE)**

• **Fonseca dos Santos, André**
 **70435 Stuttgart (DE)**
• **Schaich, Frank**
 **70435 Stuttgart (DE)**

(74) Representative: **2SPL Patentanwälte PartG mbB**
**Postfach 15 17 23**
**80050 München (DE)**

Remarks:
Amended claims in accordance with Rule 137(2) EPC.

(54) **Method and apparatus for exchanging information**

(57) Embodiments relate to a concept for exchanging information, the concept comprising exchanging (102) first information via a multi-carrier signal, the multi-carrier signal comprising a group of subcarriers occupying a first frequency sub-band of a system bandwidth; and exchanging (104) second information via a single-carrier signal occupying a second frequency sub-band of said system bandwidth.

Fig. 1

EP 2 903 198 A1

**Description**

Embodiments of the present invention generally relate to communication systems and, more particularly, to communication systems employing single- and multi-carrier signals.

Background

This section introduces aspects that may be helpful in facilitating a better understanding of the invention(s). Accordingly, the statements of this section are to be read in this light and are not to be understood as admissions about what is in the prior art or what is not in the prior art.

Future wireless systems, for example 5th Generation (5G) systems, may have to support heterogeneous requirements, from Machine Type Communication (MTC) to classical high-data rate "bit-pipe" traffic. While the former may take device cost and energy consumption as main design criteria into account, the latter needs to be served with high spectral efficiency.

Low-end devices for MTC may need energy-efficient transmission for saving battery power. This demands low Peak-to-Average-Power Ratios (PAPR), low transmitting power and narrowband transmission. Therefore, narrowband Single-Carrier (SC) transmission may be desirable for such devices. On the other hand, for spectrally efficient high data rate traffic, Multi-Carrier (MC) transmission may be desirable due to its good Multiple Input Multiple Output (MIMO) capabilities, its ability to flexibly adapt to the channel's frequency response, its easy-to-use scalable and flexible way of radio resource partitioning and its reduction of receiver complexity, allowing for simple scalar equalizers.

Hence, it is desirable to provide a signal format which may efficiently enable such heterogeneous use cases from energy efficiency to spectral efficiency.

Summary

Some simplifications may be made in the following summary, which is intended to highlight and introduce some aspects of the various exemplary embodiments, but such simplifications are not intended to limit the scope of the inventions. Detailed descriptions of preferred exemplary embodiments adequate to allow those of ordinary skill in the art to make and use the inventive concepts will follow in later sections.

According to a first aspect of the present disclosure it is provided a method for exchanging information. The method includes exchanging first information via a multi-carrier signal. The multi-carrier signal comprises a group of subcarriers occupying a first frequency sub-band of a system bandwidth. The method also includes exchanging second information via a single-carrier signal occupying a second frequency sub-band of said system bandwidth.

According to a further aspect of the present disclosure it is provided an apparatus for exchanging information. The apparatus comprises a transceiver to exchange first information via a multi-carrier signal. The multi-carrier signal comprises a group of subcarriers occupying a first frequency sub-band of a system bandwidth. Additionally or alternatively the transceiver is configured to exchange second information via a single-carrier signal occupying a second frequency sub-band of said system bandwidth.

According to a further aspect of the present disclosure it is provided an apparatus to provide a control message indicative of a desired frequency allocation of a first frequency sub-band and/or a second frequency sub-band of a system bandwidth. The first frequency sub-band is associated to a multi-carrier signal comprising a group of subcarriers occupying the first frequency sub-band. The second frequency sub-band is associated to a single-carrier signal occupying the second frequency sub-band.

Hence embodiments provide a communication concept where multi-carrier signals and single-carrier signals coexist within a common system bandwidth. In other words, multi-carrier signals and single-carrier signals share the common system bandwidth. In some embodiments the allocation of frequency sub-bands to single-carrier signals and to multi-carrier signals may be dynamic, for example, depending on a present service mix in the communication system. The physical resource usage for single-carrier signals and multi-carrier signals within the system bandwidth can be changed on the fly in some embodiments.

Some embodiments comprise digital circuitry installed within the apparatus for performing the respective methods. Such a digital control circuitry, e.g., a digital signal processor (DSP), a Field-Programmable Gate Array (FPGA), an Application-Specific Integrated Circuit (ASIC), or a general purpose processor, needs to be programmed accordingly. Hence, yet further embodiments also provide a computer program having a program code for performing embodiments of the method, when the computer program is executed on a computer or a programmable hardware device.

Embodiments may offer a flexible and scalable approach for supporting heterogeneous traffic requirements of future 5G systems. For example, the PAPR of a 12-subcarrier multi-carrier signal already exceeds 7dB, while with a single-carrier signal it can become close to 0dB. This may improve the support of energy-efficient transmission and may thus save battery consumptions and ease the design of low-end MTC devices. Additionally, embodiments allow high data rate devices to use multi-carrier signals in the same frame structure as single-carrier signals.

Brief description of the Figures

Some embodiments of apparatuses and/or methods will be described in the following by way of example only, and with reference to the accompanying figures, in which

Fig. 1      illustrates a flowchart of a method according to an embodiment;

Fig. 2      shows an exemplary allocation of frequency sub-bands of the same system bandwidth to multi-carrier and single-carrier signals;

Fig. 3      illustrates a block diagram of a transceiver apparatus according to an embodiment;

Fig. 4a     illustrates a block diagram of a transceiver apparatus according to a further embodiment; and

Fig. 4b     illustrates a block diagram of a transceiver apparatus according to another embodiment.

Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Conventional solutions handle heterogeneous traffic types within different Radio Access Networks/Technologies (RANs / RATs). For example, one carrier (system frequency band) might use the Global System for Mobile Communications (GSM) for MTC, while a different carrier might use Long-Term Evolution (LTE) for high data rates. However, with limited available radio spectrum and traffic/device types varying over different cells and over time, there is wastage of resources, when different carriers / RATs / RANs are used.

Existing standards neither fulfill the hardest constraints on some machine applications nor do they support the predicted amount of deployed machines for the future. Today, an increase of 10X to 100X in terms of devices is foreseen. Additionally, in order to make such massive deployment reality, cellular-like systems should be exploited due to their uniqueness on "everywhere-coverage". Hence, one important requirement to be considered for future 5G networks is the efficient support of massive deployment of low cost machines.

Embodiments of the present disclosure may provide a combined solution for a hybrid air interface including both multi-carrier and single-carrier signals within the same radio frame with high resource efficiency.

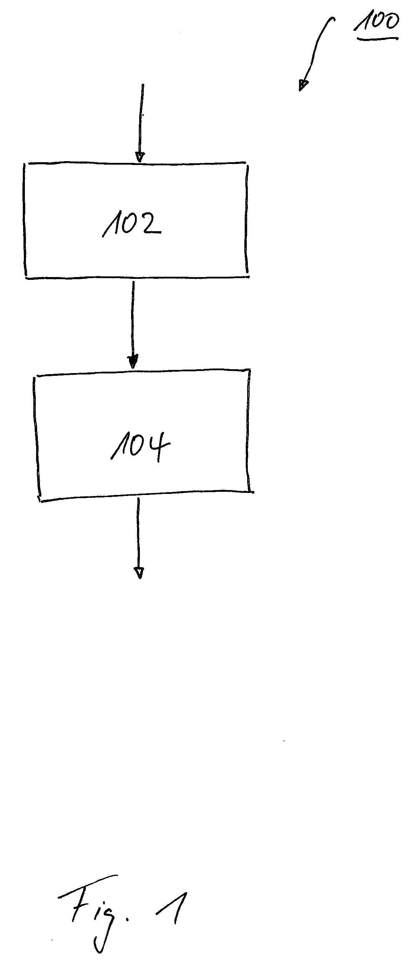

**Fig. 1** schematically illustrates a flow chart of a method 100 for exchanging information in a communication system.

Method 100 includes an act 102 of exchanging first information between a transmitter and a receiver using a multi-carrier signal. The multi-carrier signal comprises a plurality of subcarriers occupying a first frequency sub-band of a system bandwidth. Further, method 100 includes an act 104 of exchanging second information via a single-carrier signal occupying a second frequency sub-band of said system bandwidth. Hence, both multi-carrier signal and single-carrier signal are associated to the same carrier carrying the common system bandwidth.

In some embodiments the multi-carrier signal and/or the single-carrier signal may be wireless signals, respectively, underlying the same Radio Access Network/Technology (RAN / RAT). Hence, embodiments of method 100 may be used for a wireless communication system employing said system bandwidth. The system bandwidth comprises a plurality of frequency sub-bands including the first and the second frequency sub-bands. Adjacent frequency sub-bands may be substantially non-overlapping. Single-carrier signals and multi-carrier signals associated with respective frequency sub-bands may hence coexist within the same system bandwidth. A single-carrier signal may be spectrally surrounded by multi-carrier signals and vice versa. Note, that the frequency spectrum defined by the system bandwidth may also be non-contiguous in some embodiments.

Method 100 may be performed by a corresponding apparatus, which comprises transceiver circuitry configured to exchange first information via a multi-carrier signal, the multi-carrier signal comprising a group of subcarriers occupying a first frequency subband of a system bandwidth. Additionally or alternatively the transceiver circuitry may be configured to exchange second information via a single-carrier signal occupying a second frequency sub-band of the system bandwidth.

In some embodiments the apparatus may correspond to a base station or a more complex user terminal. In such cases the transceiver may cover both functionalities, i.e., exchanging information using one or more multi-carrier signals as well as exchanging information using one or more single-carrier signals. In some embodiments the acts 102 and 104 for exchanging the first and the second information may even include using (e.g. transmitting or receiving) the multi-carrier signal and the single-carrier signal concurrently by the same transceiver apparatus.

In other embodiments the transceiver apparatus may correspond to a less complex user terminal, for example. In such cases the transceiver may cover only one of the above functionalities, i.e., either exchanging information using one or more multi-carrier signals or exchanging information using one or more single-carrier signals. In such embodiments the acts 102 and 104 of exchanging the first and the second information may include using the multi-carrier signal and the single-carrier signal concurrently by different transceivers of the communication system. The different transceivers may however be implemented according to the same radio communication standard such that they are able to communicate with each other, for example directly or indirectly via a base station.

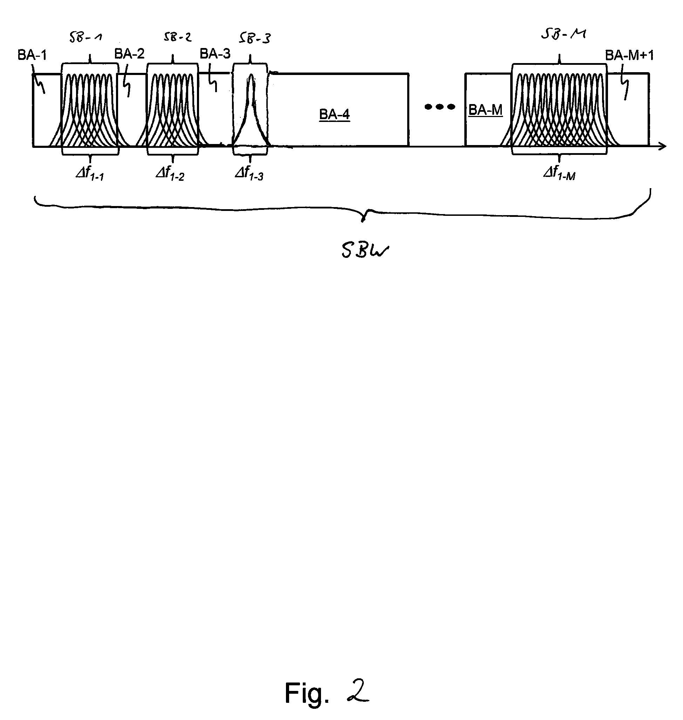

**Fig. 2** shows an exemplary allocation of frequency sub-bands of the same carrier (system bandwidth) to multi-carrier and single-carrier signals.

The frequency sub-bands SB-1, SB-2, SB-3, ..., SB-M may be for example sub-bands of a predefined frequency range defining the system bandwidth SBW. The sub-bands SB-1, SB-2, SB-3, ..., SB-M may be separated by blocked frequency ranges BA-1, BA-2, BA-3, BA-4, ..., BA-M, BA-M+1. Hence, sub-band SB-1 may be substantially outside of sub-band SB-2, which again may be substantially outside of sub-band SB-3, etc. The term "substantially outside" may be understood such that there is substantially no interference between the different sub-bands. This may be achieved by appropriate spacing and/or appropriate filtering of adjacent sub-bands, for example. One or several of the blocked frequency ranges BA-1, BA-2, BA-3, BA-4, ..., BA-M, BA-M+1 may be for example guard bands, which may be required to fulfil spectral mask requirements. Such spectral mask requirements may, for example, be predefined by a radio communication standard. Alternatively, one or several of the blocked frequency ranges BA-1, BA-2, BA-3, BA-4, ..., BA-M, BA-M+1 such as the blocked frequency range BA-4 may be for example a predefined frequency range, which is reserved for example for another radio communication standard and which therefore cannot be used by a transceiver according to embodiments. Despite of filtering there may be some level of interference between e.g. neighboring sub-bands, which either may be tolerable or may be dealt with by particular signal processing methods.

In the example illustrated in Fig. 2 the frequency sub-band SB-3 is dedicated to a single-carrier signal having a signal bandwidth $\Delta f_{1-3}$. The other frequency sub-bands SB-1, SB-2, and SB-M are dedicated to multi-carrier signals, respectively, having different signal bandwidths $\Delta f_{1-1}$, $\Delta f_{1-2}$, and $\Delta f_{1-M}$. The skilled person having benefit from the present disclosure will appreciate that there may be further or different allocations of frequency sub-bands dedicated to single-carrier signals and/or multi-carrier signals, respectively.

Hence, one idea of the present disclosure is constructing filtered signal modules, which either contain filtered single-carrier transmissions or, for example, block-wise filtered multi-carrier signals, like Universal Filtered Multi-Carrier (UFMC). Depending on the traffic mix the available sub-band slots may be dedicated to either of those transmission types.

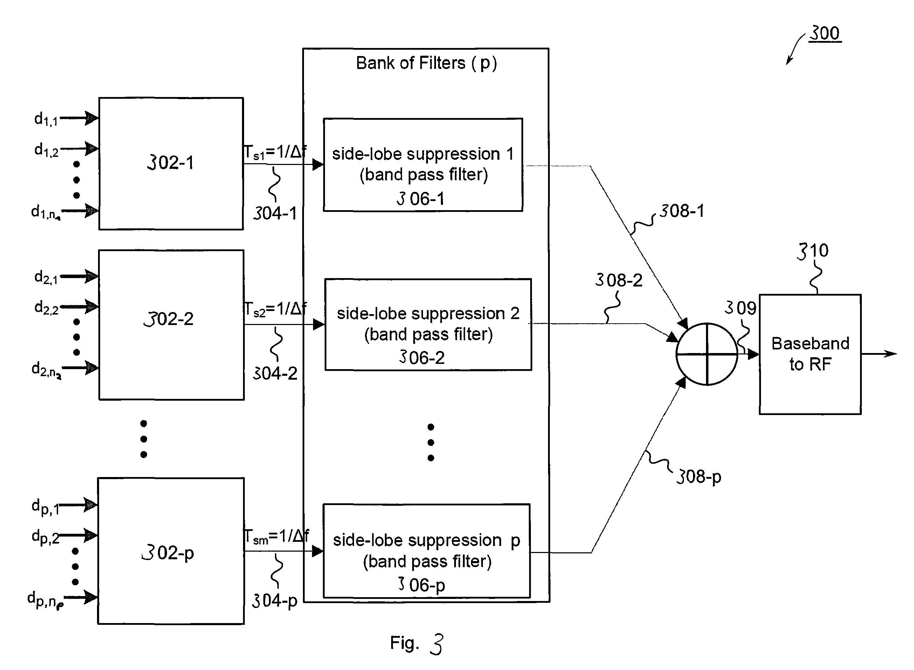

**Fig. 3** schematically illustrates a block diagram of an exemplary transmitter 300 for conditioning an UFMC multi-carrier signal according to an embodiment.

The exemplary UFMC transmitter 300 may be characterized by a frequency block-wise IDFT (IDFT = Inverse Discrete Fourier Transformation). That is to say, data symbols $d_{i,j}$ (i = 1 ... p; j = 1 ... n) may be modulated onto p groups (or frequency blocks) each comprising n subcarriers. Note that n may also be one according to embodiments. Also note that the number of subcarriers per frequency block (also referred to as sub-band) may deviate from each other (see Fig. 2).

Each frequency block i may be converted from frequency-domain to time-domain by a frequency block specific IDFT module 302-1, 302-2, ..., 302-p to obtain p time-domain signals 304-1, 304-2, ..., 304-p which may then be individually filtered by frequency block specific side-lobe suppression (band pass) filters 306-1, 306-2, ..., 306-p. The filtered time domain signals 308-1, 308-2, ..., 308-p may then be combined to the UFMC multi-carrier signal 309 and converted from baseband to Radio Frequency (RF) domain. Note that the splitting of processing functions across processing units shown in Fig. 3 is not critical, and, as can be understood by those skilled in the art, the number of processing units, the number of processing functions and an allocation of the processing functions to the processing units may vary without departing from the scope of embodiments.

The processing functions of the exemplary transmitter 300 may be split into a first group of processing units 302-1, 302-2, ..., 302-p and a second group of band pass filters 306-1, 306-2, ..., 306-p. A mathematical description of a transmitted complex-valued time-domain signal vector X may be given, for example, by following equation:

$$\mathbf{x} = \sum_{i=1}^{p} \mathbf{F}_i \mathbf{V}_i \mathbf{d}_i \qquad (1)$$

with

p: number of frequency blocks (such as a number of LTE PRBs),

$\mathbf{F}_i$: so-called Toeplitz matrix for number i of the frequency blocks, which contains a bandpass FIR filter (FIR = Finite Impulse Response) for filtering the number i of the frequency blocks,

$\mathbf{V}_i$: complex-valued matrix for number i of the frequency blocks for applying an IDFT and for a mapping of the data symbol vector $\mathbf{d}_i$ for example onto sinusoidal subcarriers,

$\mathbf{d}_i$: data symbol vector for number i of the p frequency blocks (sub-bands).

According to Fig. 3, a first data symbol vector $\mathbf{d}_1$ comprising $n_1$ data symbols $d_{1,j}$ ($j = 1 ... n_1$) may be applied to a first one 302-1 of a group of IDFT processing units 302-1, 302-2, ..., 302-p for performing a first IDFT on the first symbol vector $\mathbf{d}_1$. The IDFT may include interpolation and up-conversion by choosing respective IDFT vectors appropriately in terms of length and phase rotations. The IDFT processing unit 302-1 generates a first time domain signal 304-1, which contains a plurality of subcarriers forming a first frequency block or sub-band, e.g. SB-1 (see Fig. 2). The IDFT may have a dimension of $n_1$ x N, with $n_1$ being a number of subcarriers to be modulated for the first frequency block SB-1, and N being equal to a total number of subcarriers theoretically fitting for a predefined subcarrier distance into a whole predefined frequency range (band), when the whole predefined frequency range would be occupied by subcarriers.

In a same way, the data symbol vectors $\mathbf{d}_2$,..., $\mathbf{d}_p$ may be applied to corresponding further IDFT processing units 302-2, ..., 302-p for performing further IDFTs including interpolation and up-conversion and for generating further time domain signals 304-2, ..., 304-p, which each contain the frequency blocks (e.g. SB-2, ..., SB-p) of subcarriers. The processing units 302-1, 302-2, ..., 302-p enable a separate inverse Fourier transformation for each frequency block, which could be a sub-band or a subset of a sub-band. That is to say, for each frequency block or sub-band, indexed i, $n_i$ complex Quadrature Amplitude Modulation (QAM) data symbols $d_{i,j}$ ($i = 1 ... p$; $j = 1 ... n_i$) may be transformed to time-domain using the IDFT-matrix $V_i$. Thereby $V_i$ may be of dimension N x $n_i$ and include the relevant columns of the inverse Fourier matrix according to the respective sub-band position within the overall available frequency range.

The first time domain signal 304-1 is provided to a first one 306-1 of the group of band pass filters 306-1, 306-2, ..., 306-p to perform sideband suppression, which generates a first filtered time domain signal 308-1 corresponding to the first frequency or subcarrier block including $n_1$ subcarriers. A bandwidth of the first band pass filter 306-1 may be adapted so that the first band pass filter 306-1 is able to block and attenuate all frequency components outside a frequency range of the first frequency block (e.g. SB-1). In a similar way, the further time domain signals 304-2, ..., 304-p may be provided to corresponding further band pass filters 306-2, ..., 306-p for generating the further filtered time domain signals 308-2, ..., 308-p. The band pass filters 306-i ($i = 1, ..., p$) may each be represented by a Toeplitz matrix $\mathbf{F}_i$ with dimension (N+$N_{filter}$-1)xN, composed of the respective filter impulse response, enabling the convolution, wherein $N_{filter}$ denotes the filter length of a Finite Impulse Response (FIR) pulse shaping filter.

The filtered time domain signals 308-1, 308-2, ..., 308-p or a sum thereof may be provided to a back end processing unit 310 which may be configured to perform a baseband to RF conversion of the combined filtered time domain signals 308-1, ..., 308-p.

The frequency-block-wise filtering of UFMC brings in additional flexibility and may be used to avoid Filter-Bank based Multi-Carrier (FBMC) drawbacks. FBMC, which however is also covered by embodiments, is using additional per-subcarrier pulse-shaping filters, typically with a length of more than one multi-carrier symbol. Those filters provide very strong side-lobe suppression and can be implemented efficiently in poly-phase filter-banks.

The filtering per block of subcarriers (e.g. "physical resource block" or "sub-band" in the LTE terminology) according to some embodiments may result in band-pass filters 306-i (i = 1, ..., p) which are spectrally broader in pass-band than FBMC and thus shorter in time. This shortened time can be used to bring down the filter length, e.g. in the order of the Orthogonal Frequency Division Multiplexing (OFDM) Cyclic Prefix (CP). Short bursts may be supported well with that, as well as operation in fragmented bands. Side-lobe suppression now works in between resource (frequency) blocks, instead in between subcarriers. The filter ramp-up and ramp-down in time domain may provide a symbol shape which has inherent soft protection against inter-symbol interference (ISI), as well as robustness for supporting multiple access users which are not perfectly time-aligned, as e.g. with Autonomous Timing Advance (ATA), meaning that a mobile terminal may listen to downlink synchronization channels of the base station and align its timing based on this information and e.g. additional corrections, dealing with the estimated or worst-case propagation delay. ATA may be regarded as an open-loop approach in contrast to the LTE timing advance control which happens in a closed-loop fashion.

UFMC uses a modular structure with filtered sub-band-blocks. The embedded filtering functionality of UFMC applied similarly to single-carrier modules may enable a highly flexible and scalable air interface with high resource efficiency. When applying embodiments we are able to dynamically replace UFMC multi-carrier sub-band modules and instead embed single-carrier signals, optionally with spreading, for example, spread spectrum or time-spreading. The embedded single-carrier signals may be spectrally shaped, preferably already when constructing the digital baseband signal, with filters which align to the UFMC signal structure, for example, using the same prototype filters of UFMC in a frequency-shifted manner.

The skilled person will appreciate that single-carrier signals in this disclosure are not restricted to an OFDM-based construction method, like DFT-precoded OFDM (so-called Single-carrier Frequency-Division Multiple Access, SC-FDMA), but may be any kind of single-carrier signals, for example, "GSM-like". By using and optimizing the sub-band filters they may be integrated into the time-frequency grid.

In some embodiments, a control entity, such as a base station, for example, may control the frequency positions and the overall amount of the single-carrier and multi-carrier sub-bands, either statically or dynamically via control signaling. Hence, some embodiments provide an apparatus to provide a control message indicative of a desired frequency allocation of a first frequency sub-band and/or a second frequency sub-band of a system bandwidth. The first frequency sub-band is associated to a multi-carrier signal comprising a group of subcarriers occupying the first frequency sub-band. The second frequency sub-band is associated to a single-carrier signal occupying the second frequency sub-band.

Prior to exchanging 102 the first information via the multi-carrier signal, the first frequency sub-band for the multi-carrier signal may be selected among a plurality of available frequency sub-bands of the system bandwidth. Likewise, prior to exchanging 104 the second information via the single-carrier signal, the second frequency sub-band for the single-carrier signal may be selected among a plurality of available frequency sub-bands of the system bandwidth. Thereby the selecting the respective frequency sub-bands may be based on a control message from a control entity. The control message may comprise information indicating which frequency sub-band to select.

For example:

- If a number of machine type devices is large in a given cell or a at a given day type, the fraction of filtered single-carrier modules (single-carrier sub-bands) may be increased by the control entity, for example indicated by downlink control signaling or downlink broadcast channels.
- In case of static devices (e.g. sensors in smart cities) and in case certain frequency positions of single-carrier modules are disadvantageous, as the propagation channel of the device might be stationary in a deep fade, the base station may shift the frequency position of the single-carrier module to a more beneficial sub-band. This may require frequency-selective receive power measurements plus uplink control information, e.g. Channel Quality Information (CQI), by the device beforehand. But for stationary devices this might be done rarely or even one-time.
- A fully dynamic scheduling by the base station may assign and indicate dynamically the sub-band position and corresponding signal formats, single-carrier or multi-carrier.

Additional protection mechanisms to increase a separation of the single-carrier and multi-carrier modules may be included: Multi-carrier sub-band blocks adjacent to single-carrier sub-band blocks may use guard subcarriers (with zeros instead of data symbols), for example, or subcarriers filled with side-lobe cancellation symbols constructed for reducing the side-lobe levels lapping into in the single-carrier signal frequency range, or a combination of both.

Embodiments support any combination of filtered sub-band modules containing multi-carrier (e.g. UFMC), pure single-carrier and spread-spectrum single-carrier signals.

For UFMC, a mathematical description of the transmitted complex-valued time domain signal vector has been provided by equation (1), where p physical resource blocks (PRBs) or sub-bands are used. The complex-valued UFMC modulator input data symbol vector (e.g. QAM symbols) **d** is mapped onto "sinusoidal" subcarriers by the complex-valued matrix **V** applying an inverse discrete Fourier transform -IDFT, with a number of subcarriers per subband (e.g. 12) as input size. As output size the number of output samples of the Fourier transform (e.g. 1024) plus filter length (e.g. 73) minus 1 may be used, resulting from the linear convolution with the FIR filter. Each resource block is filtered by the Toeplitz-matrix **F** containing a band-pass Finite-Impulse Response (FIR) filter.

Each summand of the sum (i=1 to p) corresponds to the contribution of one multi-carrier sub-band module. The integration of a single-carrier sub-band module now fits smoothly into the UFMC signal structure: For a desired single-carrier sub-band k, the contribution of the k-th multi-carrier signal part may remain unused, for example, this k-th summand is set to zero. Instead the single-carrier signal, shifted to the appropriate frequency position, may add up here, being filtered by the respective sub-band filter, which may be the corresponding UFMC sub-band filter $F_k$, executing the linear convolution with the single-carrier signal.

Note that UFMC symbols are non-overlapping and have some "soft-isolation" in between each other due to the filter ramp-up and ramp-down effect. Due to this structure, a direct time neighbor of a multi-carrier sub-band block / physical resource block (a set of multi-carrier symbols or even a single multi-carrier symbol) may be a single-carrier sequence, allowing fully dynamic mixture of multi-carrier and single-carrier modules in time and frequency.

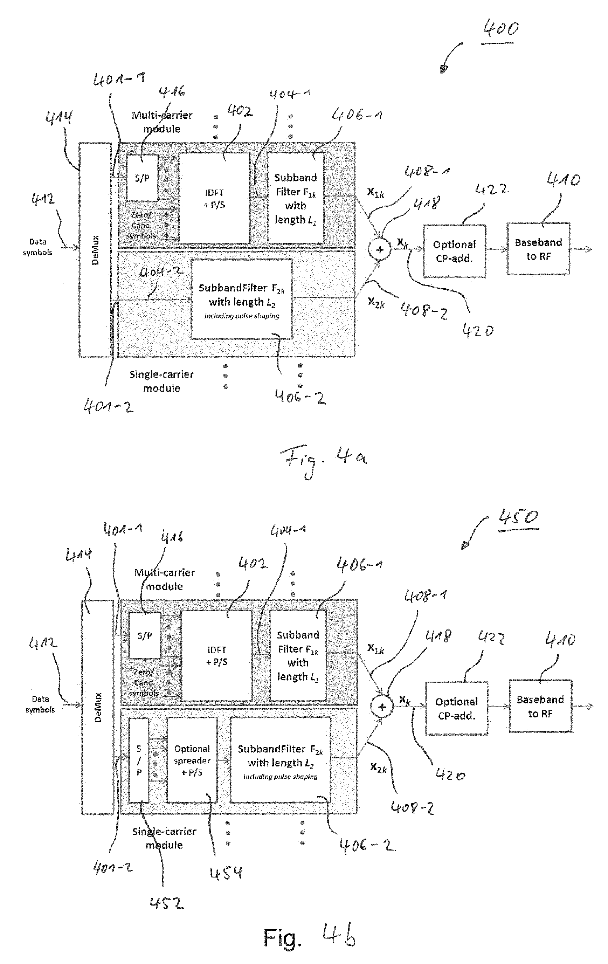

Fig. 4a illustrates a block diagram of a transceiver apparatus 400 according to an embodiment.

The apparatus 400 is similar to the apparatus 300 with the difference that some multi-carrier modules have been replaced by single-carrier modules. The apparatus 400 comprises a transceiver to exchange first information 401-1 via a multi-carrier signal 408-1. The multi-carrier signal 408-1 comprises a group of subcarriers occupying a first frequency sub-band of the system bandwidth. The transceiver is further operable to exchange second 401-2 information via a single-carrier signal 408-2 occupying a second frequency sub-band of the system bandwidth.

The first information 401-1 and the second information 401-2 may be obtained by demultiplexing a stream of data symbols 412 arriving at a de-multiplexer 414. First information symbols 401-1, which may be encoded, may be serial-to-parallel converted by means of a serial-to-parallel converter 416. A resulting first data symbol vector comprising $n_1$ data symbols $d_{1,j}$ (j = 1 ... $n_1$) may be applied to an IDFT processing unit 402 for performing an IDFT on the first symbol vector. The IDFT may include interpolation and up-conversion by choosing respective IDFT vectors appropriately in terms of length and phase rotations. The IDFT processing unit 402 generates a first time domain signal 404-1, which contains a plurality of subcarriers forming a first frequency block or sub-band. The IDFT may have a dimension of $n_1$ x N, with $n_1$ being a number of subcarriers to be modulated for the first frequency block, and N being equal to a total number of subcarriers theoretically fitting for a predefined subcarrier distance into a whole predefined frequency range (band), when the whole predefined frequency range would be occupied by subcarriers. The first time domain signal 404-1 is provided to a first band pass filter 406-1 forming a multi-carrier sub-band filter, which generates a first filtered time domain signal 408-1 corresponding to the first frequency or subcarrier block including $n_1$ subcarriers. A bandwidth of the multi-carrier sub-band filter 406-1 may be adapted so that the multi-carrier sub-band filter 406-1 is able to block and attenuate all frequency components outside a frequency range of the first frequency block.

Second information symbols 401-2 forming a second time domain signal 404-2 may be provided from the de-multiplexer 414 to a second band pass filter 406-2 forming a single-carrier sub-band filter. The single-carrier sub-band filter 406-2 generates a second filtered time domain signal 408-2 corresponding to the second frequency block including the single-carrier signal.

Hence, the apparatus 400 or its transceiver may comprise a multi-carrier sub-band filter 406-1 to perform sideband suppression for the multi-carrier signal 404-1 outside of the first frequency sub-band and/or a single-carrier sub-band filter 406-2 to perform sideband suppression for the single-carrier signal 404-2 outside of the second frequency sub-band. In some embodiments the multi-carrier sub-band filter 406-2 and the single-carrier sub-band filter 406-2 may even comprise identical pulse shaping filters.

The filtered multi-carrier signal 408-1 and the filtered single-carrier signal 408-2 may be superimposed by a superposition module 418 to obtain a composite signal 420. Thereby the superposition module 418 may be configured to superpose the filtered multi-carrier signal and the filtered single-carrier signal in the time domain. Optionally, a Cyclic Prefix (CP) may be attached (see reference numeral 422) to the composite signal 420 before being RF-processed by a back end processing unit 410 which may be configured to perform a baseband to RF conversion of the combined filtered time domain signals 408-1 and 408-2.

Fig. 4a depicts a basic embodiment of the present disclosure. The data streams 401-1, 401-2 are assigned either to a multi-carrier sub-band (upper chain) or a single-carrier sub-band (lower chain), depending on a service/device being served. If adjacent to a single-carrier sub-band, the multi-carrier sub-band may employ means to reduce out-of-band radiation, for example guard subcarriers, cancellation subcarriers, etc. Similarly, the single-carrier signal chain may apply a respective sub-band filtering functionality incorporated into a pulse shaping step.

Depending on a service mix, the available spectrum may be divided between multi-carrier and single-carrier sub-bands. In other words, depending on a distribution of service requirements of users using the common system bandwidth, a first non-predetermined number of frequency sub-bands of the system bandwidth may be dedicated to multi-carrier signal communication, while a second non-predetermined number of frequency sub-bands of the system bandwidth may be dedicated to single-carrier signal communication. In some embodiments frequency hopping may be applied for the single-carrier transmissions to collect frequency diversity gains.

In some embodiments MTC devices, i.e. user terminals, may be able to adjust their frequency allocations according to downlink control messages. In an embodiment signalling exchanges comprise a request of physical resources by the user terminal together with an indicator of a machine type class. This defines, for example, if the user terminal allows filter adaptation. Then a base station may signal back indexes of the sub-band carrier frequency and bandwidth, which may be predefined in a radio communication standard.

Fig. 4b illustrates of further embodiment of a transceiver apparatus 450. The transceiver apparatus 450 differs from the transceiver apparatus 400 in that the single-carrier module additionally includes a spreading functionality (see reference numerals 452, 454). Here, transmitting the second information 401-2 via the single-carrier signal comprises spectrally or temporally spreading the single-carrier signal.

Let us consider a simple class of devices. In such embodiments dynamic or variable frequency allocation may not be considered. That is to say, an allocation of the multi-carrier signal to the first frequency sub-band and/or an allocation of the single-carrier signal to the second frequency sub-band may be fixed. In such embodiments a cheap machine may have a fixed center frequency of operation and bandwidth. In this case, a sub-band of the spectrum may be predefined in the standard, such that 1) no signalling for the assigning of band is used for negotiation between machines and base stations and 2) the machine's hardware is very simple and cheap, due to the fact that no adaptation on the filter band or carrier frequency is required.

To summarize, embodiments comprising different transmitter modules (single-carrier / multi-carrier) may offer a flexible scalable approach supporting the heterogeneous traffic requirements of future 5G systems. For example, the PAPR of a 12-subcarrier multi-carrier signal already exceeds 7dB, while with a single-carrier signal it can become close to 0dB, which may improve the support of energy-efficient transmission and may thus save battery consumptions and ease the design of low-end MTC devices. Additionally, embodiments allow high data rate devices to use multi-carrier signals in the same frame structure.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks shall be understood as functional blocks comprising circuitry that is adapted for performing a certain function, respectively. Hence, a "means/module/circuitry for s.th." may as well be understood as a "means/module/circuitry being adapted or suited for s.th.". A means/module/circuitry being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the sub-ject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. Method (100) for exchanging information, the method comprising:

    exchanging (102) first information via a multi-carrier signal, the multi-carrier signal comprising a group of subcarriers occupying a first frequency sub-band of a system bandwidth; and
    exchanging (104) second information via a single-carrier signal occupying a second frequency sub-band of the system bandwidth.

2. The method (100) of claim 1, wherein the second frequency sub-band is substantially outside of the first frequency sub-band.

3. The method (100) of claim 1, comprising:

    prior to exchanging (102) the first information via the multi-carrier signal, selecting the first frequency sub-band for the multi-carrier signal among a plurality of available frequency sub-bands of the system bandwidth; and/or
    prior to exchanging (104) the second information via the single-carrier signal, selecting the second frequency sub-band for the single-carrier signal among a plurality of available frequency sub-bands of the system bandwidth.

4. The method (100) of claim 3, wherein selecting the frequency sub-band is based on a control message from a control entity, the control message comprising information indicating which frequency sub-band to select.

5. The method (100) of claim 1, comprising:

    depending on a distribution of service requirements of users using the system bandwidth,
    dedicating a first number of frequency sub-bands of the system bandwidth to multi-carrier signal communication, and/or
    dedicating a second number of frequency sub-bands of the system bandwidth to single-carrier signal communication.

6. The method (100) of claim 1, wherein exchanging (104) the second information via the single-carrier signal comprises frequency hopping of the single-carrier signal among different frequency sub-bands of the system bandwidth.

7. The method (100) of claim 1, wherein exchanging (104) the second information via the single-carrier signal comprises spectrally or temporally spreading the single-carrier signal.

8. The method (100) of claim 1, wherein an allocation of the multi-carrier signal to the first frequency sub-band and/or an allocation of the single-carrier signal to the second frequency sub-band is fixed.

9. The method (100) of claim 1, wherein exchanging (102) the first information via the multi-carrier signal comprises performing sideband suppression for the multi-carrier signal outside of the first frequency sub-band, and/or wherein exchanging (104) the second information via the single-carrier signal comprises performing sideband suppression for the single-carrier signal outside of the second frequency sub-band.

10. The method (100) of claim 1, wherein exchanging (102; 104) the first and the second information comprises using the multi-carrier signal and the single-carrier signal concurrently.

11. Apparatus (300; 400; 450) for exchanging information, the apparatus comprising:

a transceiver to exchange first information (401-1) via a multi-carrier signal (408-1), the multi-carrier signal comprising a group of subcarriers occupying a first frequency sub-band of a system bandwidth and/or to exchange second information (401-2) via a single-carrier signal (408-2) occupying a second frequency sub-band of the system bandwidth.

**12.** The apparatus (300; 400; 450) of claim 11, wherein the transceiver comprises a multi-carrier sub-band filter (406-1) to perform sideband suppression for the multi-carrier signal (408-1) outside of the first frequency sub-band and/or a single-carrier sub-band filter (406-2) to perform sideband suppression for the single-carrier signal (408-2) outside of the second frequency sub-band.

**13.** The apparatus (300; 400; 450) of claim 11, further comprising:

a frequency allocation module configured to adjust a frequency allocation of the first frequency sub-band and/or the second frequency sub-band in response to at least one control message indicative of a desired frequency allocation.

**14.** The apparatus (300; 400; 450) of claim 11, further comprising:

a superposition module to superpose the filtered multi-carrier signal (408-2) and the filtered single-carrier signal (408-2) to obtain a composite signal (420).

**15.** The apparatus (300; 400; 450) of claim 11, further comprising:

a transform module (402) configured to perform, for the multi-carrier signal, a transformation from frequency domain to time domain to generate a first time domain signal (404-1),
wherein the single-carrier signal is a second time domain signal (404-2),
wherein the multi-carrier sub-band filter (406-1) is configured to filter said first time domain signal (404-1), and
wherein the single-carrier sub-band filter (406-1) is configured to filter the second time domain signal (404-2).

**Amended claims in accordance with Rule 137(2) EPC.**

**1.** Method (100) for exchanging information, the method comprising:

exchanging (102) first information via a multi-carrier signal, the multi-carrier signal comprising a group of subcarriers occupying a first frequency sub-band of a system bandwidth; and
exchanging (104) second information via a single-carrier signal occupying a second frequency sub-band of the system bandwidth.

**2.** The method (100) of claim 1, wherein the second frequency sub-band is outside of the first frequency sub-band.

**3.** The method (100) of claim 1, comprising:

prior to exchanging (102) the first information via the multi-carrier signal, selecting the first frequency sub-band for the multi-carrier signal among a plurality of available frequency sub-bands of the system bandwidth; and/or prior to exchanging (104) the second information via the single-carrier signal, selecting the second frequency sub-band for the single-carrier signal among a plurality of available frequency sub-bands of the system bandwidth.

**4.** The method (100) of claim 3, wherein selecting the frequency sub-band is based on a control message from a control entity, the control message comprising information indicating which frequency sub-band to select.

**5.** The method (100) of claim 1, comprising:

depending on a distribution of service requirements of users using the system bandwidth,
dedicating a first number of frequency sub-bands of the system bandwidth to multi-carrier signal communication, and/or
dedicating a second number of frequency sub-bands of the system bandwidth to single-carrier signal communication.

**6.** The method (100) of claim 1, wherein exchanging (104) the second information via the single-carrier signal comprises frequency hopping of the single-carrier signal among different frequency sub-bands of the system bandwidth.

**7.** The method (100) of claim 1, wherein exchanging (104) the second information via the single-carrier signal comprises spectrally spreading the single-carrier signal.

**8.** The method (100) of claim 1, wherein an allocation of the multi-carrier signal to the first frequency sub-band and/or an allocation of the single-carrier signal to the second frequency sub-band is fixed.

**9.** The method (100) of claim 1, wherein exchanging (102) the first information via the multi-carrier signal comprises performing sideband suppression for the multi-carrier signal outside of the first frequency sub-band, and/or wherein exchanging (104) the second information via the single-carrier signal comprises performing sideband suppression for the single-carrier signal outside of the second frequency sub-band.

**10.** The method (100) of claim 1, wherein exchanging (102; 104) the first and the second information comprises using the multi-carrier signal and the single-carrier signal concurrently.

**11.** Apparatus (300; 400; 450) for exchanging information, the apparatus comprising:

a transceiver to exchange first information (401-1) via a multi-carrier signal (408-1), the multi-carrier signal comprising a group of subcarriers occupying a first frequency sub-band of a system bandwidth and/or to exchange second information (401-2) via a single-carrier signal (408-2) occupying a second frequency sub-band of the system bandwidth.

**12.** The apparatus (300; 400; 450) of claim 11, wherein the transceiver comprises a multi-carrier sub-band filter (406-1) to perform sideband suppression for the multi-carrier signal (408-1) outside of the first frequency sub-band and/or a single-carrier sub-band filter (406-2) to perform sideband suppression for the single-carrier signal (408-2) outside of the second frequency sub-band.

**13.** The apparatus (300; 400; 450) of claim 11, further comprising:

a frequency allocation module configured to adjust a frequency allocation of the first frequency sub-band and/or the second frequency sub-band in response to at least one control message indicative of a desired frequency allocation.

**14.** The apparatus (300; 400; 450) of claim 11, further comprising:

a superposition module to superpose the filtered multi-carrier signal (408-2) and the filtered single-carrier signal (408-2) to obtain a composite signal (420).

**15.** The apparatus (300; 400; 450) of claim 11, further comprising:

a transform module (402) configured to perform, for the multi-carrier signal, a transformation from frequency domain to time domain to generate a first time domain signal (404-1),
wherein the single-carrier signal is a second time domain signal (404-2),
wherein the multi-carrier sub-band filter (406-1) is configured to filter said first time domain signal (404-1), and
wherein the single-carrier sub-band filter (406-1) is configured to filter the second time domain signal (404-2).

100

102

104

Fig. 1

Fig. 2

Fig. 3

Fig. 4a

Fig. 4b

**Europäisches Patentamt**
**European Patent Office**
**Office européen des brevets**

# EUROPEAN SEARCH REPORT

Application Number

EP 14 30 5154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/293214 A1 (ANSARI ARIF [US] ET AL) 20 December 2007 (2007-12-20)<br>* paragraph [0009] *<br>* paragraph [0041] *<br>* paragraph [0012] *<br>* paragraph [0055] *<br>* paragraph [0022] *<br>----- | 1-15 | INV.<br>H04L5/00 |
| X | WO 2013/070149 A1 (ERICSSON TELEFON AB L M [SE]; KAZMI MUHAMMAD [SE]; LARSSON MAGNUS [SE]) 16 May 2013 (2013-05-16)<br>* page 12, column 21 - page 13, column 8 *<br>* page 18, column 20 - page 19, column 9 *<br>* figure 6 *<br>----- | 1-15 | |
| X | US 2010/103897 A1 (SUH SUNG-JIN [KR] ET AL) 29 April 2010 (2010-04-29)<br>* paragraph [0010] - paragraph [0013] *<br>* paragraph [0074] - paragraph [0075] *<br>* paragraph [0081] *<br>* figure 4 *<br>----- | 1-15 | |

TECHNICAL FIELDS SEARCHED (IPC)

H04L

The present search report has been drawn up for all claims

| Place of search | Date of completion of the search | Examiner |
|---|---|---|
| The Hague | 7 July 2014 | Anghel, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 5154

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2014

| Patent document cited in search report | Publication date | Patent family member(s) | | Publication date |
|---|---|---|---|---|
| US 2007293214 A1 | 20-12-2007 | US | 2007293214 A1 | 20-12-2007 |
| | | WO | 2008063242 A2 | 29-05-2008 |
| WO 2013070149 A1 | 16-05-2013 | US | 2014161052 A1 | 12-06-2014 |
| | | WO | 2013070149 A1 | 16-05-2013 |
| US 2010103897 A1 | 29-04-2010 | NONE | | |

EPO FORM P0459

For more details about this annex : see Official Journal of the European Patent Office, No. 12/82